# EUROPÄISCHE PATENTANMELDUNG

(11) **EP 2 875 983 A1**
(43) Veröffentlichungstag der Anmeldung: **27.05.2015**
(21) Anmeldenummer: 14194324.1
(22) Anmeldetag: 21.11.2014
(51) Int. Cl.: B60L 7/00, B65G 1/04

(54) **Förderwagen und Verfahren zur Beschleunigung und Abbremsen des Förderwagens**

(30) Priorität: 22.11.2013 DE 102013223960
(71) Anmelder: Dücker Group GmbH, 40764 Langenfeld (DE)
(72) Erfinder: Stehr, Roland, 40764 Langenfeld (DE)
(74) Vertreter: Greif, Thomas

(57) **Zusammenfassung**

Verfahren zum Beschleunigen und Abbremsen eines Förderwagens und Förderwagen (1) mit aufgesetzten antreibbaren Förderelementen, die eine ebene Förderfläche bilden, wobei zum Verfahren des Förderwagens quer zur Förderrichtung der Förderelemente an der Unterseite des Förderwagens mindestens ein Antriebsrad (9; 10) vorgesehen ist, das von einem Fahrantrieb (12) angetrieben wird, dadurch gekennzeichnet, dass Mittel vorgesehen sind, um den Fahrantrieb als elektromotorische Bremse zu verwenden.

## Beschreibung

Die Erfindung betrifft einen Förderwagen mit aufgesetzten antreibbaren Förderelementen und ein Verfahren zum Beschleunigen und Abbremsen des Förderwagens gemäß den Merkmalen des Oberbegriffes der jeweiligen unabhängigen Patentansprüche.

Zum Transport von Stapeln aus blatt- oder plattenförmigen Gütern, beispielsweise Wellpappestapeln, oder Material in Form von Rollen, zum Beispiel Papierrollen, werden bekannterweise Förderwagen eingesetzt. Die Förderwagen, häufig auch Transferwagen genannt, sind verfahrbare Wagen mit aufgesetzten antreibbaren Förderelementen, welche quer zur Verfahrrichtung des Förderwagens fördern.

Förderwagen werden beispielsweise in Wellpappe- und papierverarbeitenden Betrieben eingesetzt, um Förderguteinheiten von einer verarbeitenden Maschine zu einer nächsten weiterverarbeitenden Maschine zu befördern. Üblicherweise werden dem Förderwagen von einer Maschine über Rollenbahnen Förderguteinheiten zugeführt, die vom Förderwagen mittels der auf dem Wagen befindlichen Förderelementen aufgenommen werden. Der Förderwagen fährt anschließend quer zur Förderrichtung der Förderelemente und Rollenbahnen zur weiterverarbeitenden Maschine und gibt die Förderguteinheiten an diese Maschine weiter.

Der Förderwagen verkettet somit einzelne Produktionslinien und befinden sich aufgrund dessen ständig in Bewegung.

Die DE 10 2012 201 641 A1 beschreibt einen gattungsgemäßen Förderwagen, der aus zwei oder mehr Tragrahmen gebildet wird, in denen antreibbare Förderelemente mit komplanaren und parallel fördernden Förderflächen gelagert sind.

Die vom Förderwagen beförderten Güter sind häufig über 5 t schwer. Um dieses Gewicht fördern zu können, ist der Förderwagen entsprechend groß, übliche Maße sind ca. 3 x 8 m, und auch dementsprechend schwer, z. B. rund 4 t Leergewicht. Durch das ständige Verfahren in der Produktionsstätte besteht die Gefahr, dass Personen von einem Förderwagen angefahren werden. Diese Gefährdungen ergeben sich insbesondere, wenn Personen plötzlich vom seitlichen Bereich in den Fahrweg des Wagens eintreten. Man ist deshalb bestrebt, den Bremsweg des Förderwagens möglichst kurz zu halten. Gleichzeitig verlangt das stetig steigende Leistungsvermögen moderner Produktions- und Verarbeitungsmaschinen höhere Förderwagengeschwindigkeiten, um den An- und Abtransport von Förderguteinheiten an die Maschinen zu beschleunigen und die Effizienz der Gesamtanlage zu verbessern.

Die Sicherheitsanforderungen an den Förderwagen stehen somit den Anforderungen bedingt durch die hohe Produktionstaktung moderner Anlagen gegenüber. Der Erfindung liegt daher die Aufgabe zugrunde, einen Förderwagen mit verbessertem Antriebskonzept und ein Verfahren zum Beschleunigen und Abbremsen des Förderwagens bereitzustellen, so dass ein stärkeres Bremsen und Beschleunigen und eine präzisere und schnellere Positionierung des Förderwagens möglich ist. Aus sicherheitstechnischer Sicht soll bei gleichbleibender Geschwindigkeit der Bremsweg verkürzt werden.

Diese Aufgabe wird nach der Erfindung durch einen Förderwagen mit den Merkmalen gemäß Anspruch 1 und ein Verfahren zum Abbremsen und Beschleunigen des Wagens nach Anspruch 7 gelöst.

Die elektromotorische Bremse zeigt insbesondere zu Beginn eines eingeleiteten Bremsvorgangs eine deutlich stärkere Bremswirkung als eine mechanische Bremse.

Die Unteransprüche enthalten bevorzugte, da besonders vorteilhafte Ausgestaltungen eines erfindungsgemäßen Förderwagens.

Bekannte Förderwagen weisen einen Fahrantrieb auf, der zwei über eine Achse verbundene Räder des Förderwagens antreibt. Nach Patentanspruch 2 sind mehrere Fahrantriebe vorgesehen, die jeweils ein Antriebsrad antreiben. Jeder dieser Fahrantriebe kann als elektromotorische Bremse eingesetzt werden. Die aufsummierte Bremskraft der Fahrantriebe erhöht die Bremswirkung auf den Förderwagen deutlich, was einen verkürzten Bremsweg zur Folge hat. Weiterhin wird die Zuverlässigkeit des Förderwagens erhöht, da bei Ausfall eines Fahrantriebs der Wagen aufgrund der restlichen Fahrantriebe zumindest eingeschränkt funktionsfähig bleibt. Die Verwendung mehrerer Fahrantriebe mit jeweils geringer Leistung im Vergleich zur Verwendung eines einzelnen Fahrantriebs mit hoher Leistung führt außerdem zu einer Gewichtsersparnis und einer gleichmäßigeren Gewichtsverteilung. Die mehreren Fahrantriebe führen auch im Umkehrschluss zu einer stärkeren Beschleunigung und damit einer rascheren Positionierung des Wagens.

Der Förderwagen nach Patentanspruch 3 besteht aus lösbar mechanisch miteinander verbindbaren Tragrahmen, wobei jeder dieser Rahmen an seiner Unterseite zwei Antriebsräder mit jeweils einem Fahrantrieb aufweist. Durch die modulare Bauweise kann der Förderwagen zum einen vereinfacht an seinen Einsatzort transportiert werden. Auch ermöglicht die Modulbauweise bei einer Umstellung der Produktion auf breitere Güter den Förderwagen an diese breiteren Güter anzupassen. Eine Anschaffung eines neuen Förderwagens wird damit vermieden.

Der modular aufgebaute Förderwagen zeigt darüber hinaus durch eine spezielle Ausgestaltung der Kopplung zwischen den Tragrahmen eine zum monolithisch konstruierten Förderwagen erhöhte Elastizität. Dadurch haben auch bei unebenem Boden alle Räder Bodenkontakt, was unter anderem den Beschleunigungs- und Abbremsvorgang weiter verbessert. Sollte ein Antriebsrad ausfallen oder die Haftung verlieren, hat dies einen deutlich geringeren Einfluss auf die Funktionalität des Wagens. Ferner führt die Elastizität zu einer geringeren Materialermüdung und in der Folge zu einer längeren Lebensdauer und geringeren Ausfallwahrscheinlichkeiten des Wagens.

Durch Austausch oder Hinzufügen einzelner Module kann der Förderwagen an sich verändernde Produktionsbedürfnisse angepasst werden. Da jedes Modul Antriebsräder aufweist, wird mit der Größe des Förderwagens auch die Antriebs- und Bremsleistung entsprechend skaliert. Im Reparaturfall kann das defekte Modul gegen ein funktionierendes Ersatzmodul ausgetauscht werden, der Förderwagen ist damit zeitnah wieder einsatzfähig.

Um die Bremskraft des Wagens weiter zu verbessern, können in einer vorteilhaften Ausgestaltung nach Anspruch 4 an jedem Antriebsrad zusätzlich Mittel zur mechanischen Bremsung vorgesehen werden. Vorzugsweise werden diese Mittel als Scheibenbremsen ausgeführt. Neben einer Bremskraftverstärkung stellen die mechanischen Bremsen sicher, dass bei Ausfall der Fahrantriebe und damit der elektromotorischen Bremsen der Wagen dennoch im Bedarfsfall rechtzeitig zum Stillstand kommt.

Nach der vorteilhaften Ausgestaltung nach Anspruch 5 wird der Förderwagen zur genaueren Positionierung auf Schienen geführt.

Die Zeichnungen dienen zur Erläuterung der Erfindung anhand verschiedener bevorzugter Ausführungsbeispiele.

Es zeigen:
- **Fig. 1**: die Unterseite eines Förderwagens in einer Perspektivsicht
- **Fig. 2**: ein Förderwagen mit Förderfläche und Aufbauten in einer Perspektivsicht
- **Fig. 3**: einen Tragrahmen mit vier Antriebsrädern und Fahrantrieben in einer Perspektivsicht

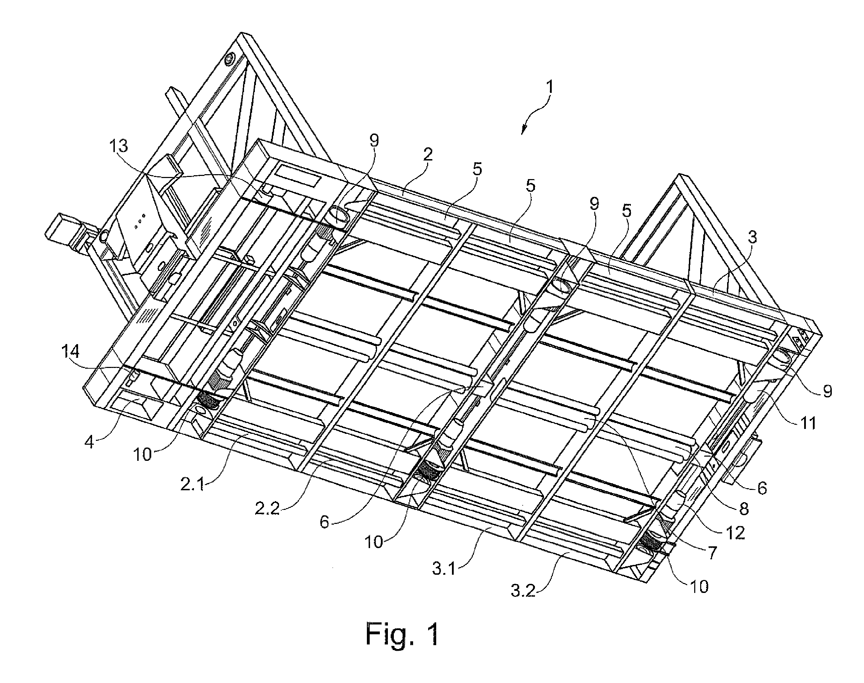

Der in Figur 1 dargestellte Förderwagen 1 besteht aus zwei lösbar mechanisch miteinander verbundenen Tragrahmen 2, 3 und einem zusätzlichen ebenfalls lösbar mechanisch verbundenen Rahmen 4. Die Verbindung zwischen den Rahmen erfolgt über Bolzenverbindungen an ihren Längsseiten, wobei mindestens eine Bohrung für die Bolzen als Spielpassung und mindestens eine Bohrung als Presspassung ausgelegt ist. Durch die Spielpassung wird eine definierte Elastizität zwischen den Tragrahmen erreicht, welche die bereits zuvor genannten Vorteile aufweist. Die Verbindungen der Tragrahmen sind zum Schutz der darunter liegenden Vorrichtungen und aus ästhetischen und arbeitssicherheitstechnischen Gründen mit Verdeckungselementen, bevorzugt aus Blech, über die komplette Wagenbreite abgedeckt.

Die miteinander verbundenen Tragrahmen 2, 3 wiederum setzen sich aus lösbar mechanisch miteinander verbundenen Teilrahmen 2.1, 2.2 bzw. 3.1, 3.2 zusammen. Jeder Teilrahmen 2.1, 2.2, 3.1, 3.2 weist ein Förderelement, ausgeführt als eine umlaufende Modulkette 5 auf. Die im vorliegenden Ausführungsbeispiel vier Modulketten fördern parallel und bilden eine komplanare, ebene Förderfläche.

Zum Antrieb der Modulketten 5 ist in jedem Tragrahmen 2, 3 ein Elektromotor 6 mit der zugehörigen Steuer- und Versorgungstechnik vorgesehen. In den Längsträgern der Teilrahmen 2.1, 2.2, 3.1, 3.2 sind Antriebswellen 7, 8 gelagert, wobei die Antriebswellen zweier Teilrahmen, welche einen Tragrahmen bilden, an der Verbindung der Teilrahmen koppelbar sind. Auf diese Weise treibt der Elektromotor 6 über die Antriebswellen 7, 8 die zwei Modulketten eines Tragrahmens umlaufend an.

Zum Verfahren des Transferwagens 1 quer zur Förderrichtung sind für jeden Rahmen 2, 3, 4 zwei parallel angeordnete Antriebsräder 9, 10 am Wagen angeordnet. Jedes dieser Antriebsräder 9, 10 wird von einem dem jeweiligen Antriebsrad zugeordneten Fahrantrieb 11, 12, einem Elektromotor, angetrieben. Die Antriebsräder 9, 10 mitsamt der Fahrantriebe 11, 12 sind an den Längsseiten der Tragrahmen vorgesehen, d.h. dass auch im Verbindungsbereich zweier Tragrahmen 2, 3 mindestens zwei Antriebsräder mit Fahrantrieben angeordnet sind. Damit schützt das Verdeckungselement auch diese Fahrantriebe und Antriebsräder. Der Transferwagen 1 in Fig. 1 weist somit sechs einzeln angetriebene Antriebsräder auf, die über die Grundfläche des Wagens gleichmäßig verteilt sind.

Die elektrische Versorgung und Steuerung der einzelnen Fahrantriebe erfolgt über ein BUS-System.

An jedem der sechs Antriebsräder sind zudem Scheibenbremsen vorgesehen. Diese werden in den Figuren nicht gezeigt.

Am zusätzlichen Rahmen 4 sind außerdem zwei Stützräder 13, 14 angebracht. Bevorzugt sind Stützräder und Antriebsräder an jeder Seite des Förderwagens in einer Linie angeordnet, so dass ein Verfahren des Förderwagens auf Schienen möglich ist.

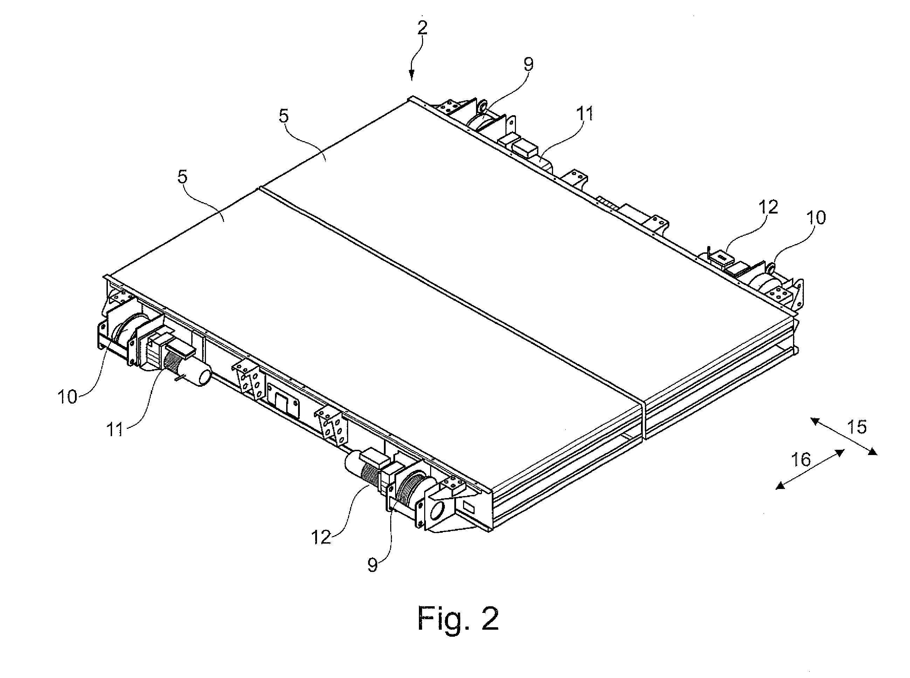

Fig. 2 zeigt im Detail die Anbringung der Antriebsräder 9, 10 mit den jeweiligen Fahrantrieben 11, 12 am Tragrahmen. Zur besseren Veranschaulichung ist ein einzelner Tragrahmen 2 abgebildet. Die Förderrichtung der Modulketten 5 zeigt der Pfeil 15, die Verfahrrichtung des Förderwagens wird von Pfeil 16 angezeigt.

An dem Tragrahmen 2 sind in Förderrichtung längsseitig auf jeder Seite des Rahmens an den Längsträgern zwei Antriebsräder 9, 10 mit jeweiliger Antriebseinheit 11, 12 in Gestalt eines Elektromotors angebracht. Sowohl Antriebsräder als auch Fahrantriebe sind unterhalb der Förderebene angeordnet und stehen somit nicht als Hindernis in vertikaler Richtung hervor, wenn die Förderfläche der Modulketten 5 durch Verbindung mehrerer Tragrahmen erweitert wird.

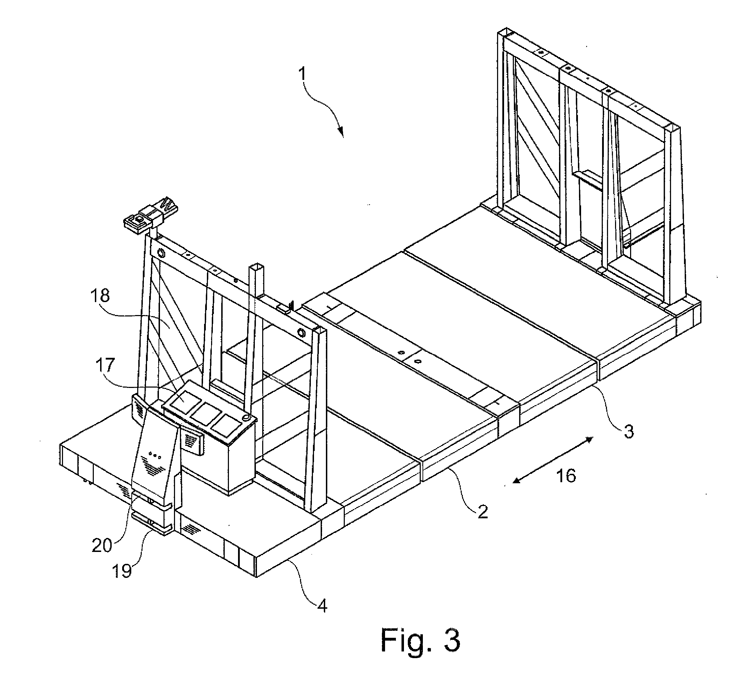

Fig. 3 zeigt die Oberseite eines erfindungsgemäßen Förderwagens 1, gebildet aus zwei Tragrahmen 2, 3 und einem zusätzlichen Rahmen 4. Auf dem zusätzlichen Rahmen 4 sind Bedienkonsolen 17 und Halte- und Schutzelemente 18 angebracht. An der bezogen auf die Fahrtrichtung 16 Vorder- und Rückseite des Förderwagens sind jeweils zwei Laserscanner 19 und 20 montiert, die den Fahrweg vor dem Transferwagen auf Hindernisse wie z.B. Personen überwachen.

Die Laserscanner sind übereinander angeordnet und überwachen den Fahrweg vor dem Wagen auf einer Breite der Wagenbreite plus mindestens einem Meter jeweils links und rechts vom Fahrweg.

Die mehreren Fahrantriebe ermöglichen eine verteilte Krafteinleitung über die Antriebsräder auf die Schienen. Außerdem ist das Gewicht der Antriebe im Vergleich zu einem zentralen Antrieb vorteilhafter verteilt - der Förderwagen kann besser und schneller beschleunigen. Taucht ein Hindernis im Fahrweg des Wagens auf, beispielsweise durch Eintreten einer Person in den Fahrweg, erfassen dies die Laserscanner 19, 20. Der Laserscanner sendet ein Signal an die Steuerung des Förderwagens, der dann die Bremsung des Wagens einleitet. Dazu werden alle vorhandenen Elektromotoren umgepolt und als elektromotorische Bremse verwendet. Möglich ist sowohl die Verwendung als einfache Widerstandsbremse, als auch die Energierückgewinnung durch Rekuperation. Bei letzterem Fall können Mittel vorgesehen werden, die erzeugte elektrische Energie zu speichern oder in ein Netz des Betriebes einzuspeisen.

Gleichzeitig mit der Aktivierung der elektromotorischen Bremsen werden auch die mechanischen Bremsen ausgelöst. Die mechanischen Bremsen tragen insbesondere bei niedrigeren Drehzahlen, d.h. wenn der Förderwagen bereits auf eine niedrigere Geschwindigkeit runtergebremst ist, einen erheblichen Anteil zur Bremswirkung bei.

Der Förderwagen kommt aufgrund des Einsatzes der erfindungsgemäßen Bremse nach Einleitung des Bremsvorgangs beispielsweise bei einer Fahrgeschwindigkeit von 2 Metern pro Sekunde nach etwa 1 Meter Bremsweg zum Stillstand. In Abhängigkeit verschiedener Parameter (zum Beispiel Untergrund, Beschaffenheit der Antriebsräder, Gewicht des Förderwagens, Leistungsfähigkeit der elektromotorischen Bremse und so weiter) können auch bei 3 Metern pro Sekunde 1,5 Meter Bremsweg erzielt werden. Bei einer Fahrgeschwindigkeit von 3 Metern pro Sekunde kann der Förderwagen sogar nach spätestens ca. 1 Meter zum Stillstand kommen.

Ist das Hindernis aus dem Fahrweg entfernt, muss dies vom Fahrzeugführer manuell bestätigt werden. Die Steuerung schickt dann ein Signal zu den einzelnen Fahrantrieben und mechanischen Bremsen, der Förderwagen beschleunigt wieder und fährt an seine vorbestimmte Position.

## Patentansprüche

1. Förderwagen mit aufgesetzten antreibbaren Förderelementen, die eine ebene Förderfläche bilden, wobei zum Verfahren des Förderwagens quer zur Förderrichtung der Förderelemente an der Unterseite des Förderwagens mindestens ein Antriebsrad vorgesehen ist, das von einem Fahrantrieb angetrieben wird, **dadurch gekennzeichnet, dass** Mittel vorgesehen sind, um den Fahrantrieb als elektromotorische Bremse zu verwenden.

2. Förderwagen nach Anspruch 1, **dadurch gekennzeichnet, dass** der Förderwagen mehrere Fahrantriebe aufweist, wobei jeder Fahrantrieb jeweils ein Antriebsrad antreibt.

3. Förderwagen nach Anspruch 1 oder 2, **dadurch gekennzeichnet, dass** der Förderwagen aus lösbar mechanisch miteinander verbindbaren Tragrahmen besteht und jeder dieser Rahmen an seiner Unterseite zwei Antriebsräder mit jeweils einem Fahrantrieb aufweist.

4. Förderwagen nach einem der Ansprüche 1 bis 3, **dadurch gekennzeichnet, dass** zusätzlich zur elektromotorischen Bremse zumindest an jedem Antriebsrad Mittel zum mechanischen Bremsen vorgesehen sind.

5. Förderwagen nach einem der Ansprüche 1 bis 4, **dadurch gekennzeichnet, dass** der Förderwagen auf Schienen geführt wird.

6. Verfahren zum Beschleunigen und Abbremsen eines Förderwagens nach einem der vorherigen Ansprüche, **dadurch gekennzeichnet, dass** der Fahrantrieb oder die Fahrantriebe auch als elektromotorische Bremse genutzt werden.

7. Verfahren nach Anspruch 6, **dadurch gekennzeichnet, dass** jedes Antriebsrad des Förderwagens einzeln elektromotorisch angetrieben und gebremst wird.

8. Verfahren nach Anspruch 6 oder 7, **dadurch gekennzeichnet, dass** zum Abbremsen des Förderwagens jedes Antriebsrad auch mechanisch gebremst wird.

9. Verfahren nach einem der Ansprüche 6 bis 8, **dadurch gekennzeichnet, dass** der Bremsweg des Förderwagens bei einer Fahrgeschwindigkeit von 3 m/s nur noch ca. 1 m beträgt, wobei eine Positionierung des Wagens mit einer Genauigkeit von 2 mm vorgenommen werden kann.
